# EUROPEAN PATENT APPLICATION

(11) **EP 4 838 348 A1**
(43) Date of publication of application: **11.11.2026**
(21) Application number: 25822470.8
(22) Date of filing: 23.04.2025
(51) Int. Cl.: G06F 3/0488, G06F 3/041, G06F 3/0484, G06F 3/0482, H04W 4/80

(54) **ELECTRONIC APPARATUS AND CONTROL METHOD THEREFOR**

(30) Priority: 10.06.2024 KR 20240075061
(71) Applicant: Samsung Electronics Co., Ltd., Suwon-si, Gyeonggi-do 16677 (KR)
(72) Inventor: JUNG, Jingun, Suwon-si Gyeonggi-do 16677 (KR); KIM, Yoonyoung, Suwon-si Gyeonggi-do 16677 (KR); MOON, Joosun, Suwon-si Gyeonggi-do 16677 (KR); MIN, Yuri, Suwon-si Gyeonggi-do 16677 (KR); SON, Sunmin, Suwon-si Gyeonggi-do 16677 (KR); YUN, Soyoung, Suwon-si Gyeonggi-do 16677 (KR); LEE, Sangyoon, Suwon-si Gyeonggi-do 16677 (KR); CHO, Eunjoo, Suwon-si Gyeonggi-do 16677 (KR); CHOI, Gippeum, Suwon-si Gyeonggi-do 16677 (KR)
(74) Representative: Appleyard Lees IP LLP
(86) International application number: PCT/KR2025/005486
(87) International publication number: WO 2025/258840

(57) **Abstract**

An electronic apparatus includes a display, a communication interface, a memory storing instructions, and one or more processors. The instructions, when executed by the one or more processors, cause the electronic apparatus to detect a trigger manipulation on the display, determine an initial touch point and a final touch point of a drawing trajectory of the trigger manipulation, identify a partial region having a position and a shape corresponding to the trigger manipulation by extending the drawing trajectory to a boundary region of the display, display, using the display, the remote control **UI** in the partial region by accessing the first data for the remote control **UI** stored in the memory, and transmit, to the external device via the communication interface, a control signal corresponding to a user touch, based on the user touch being detected on the remote control **UI.**

## Description

### [TECHNICAL FIELD]

The present disclosure relates generally to electronic devices, and more particularly, to an apparatus for remotely controlling an external device and a controlling method thereof.

### [BACKGROUND ART]

As electronic technology advances, a user may remotely control various types of electronic apparatuses by using a remote control (e.g., a remote control device). The remote control may be implemented in the form of a dedicated remote control for each electronic apparatus.

However, recently, technology of using a mobile device (e.g., a mobile phone, a smartphone, or the like) or another electronic apparatus, which may be carried by the user, as the remote control for the electronic apparatuses may be used. For example, the technology may be implemented in such a way that a remote control user interface (UI) for controlling the remote control may be displayed on a screen of the mobile device, and a remote control signal may be transmitted to the external apparatus if the user touches one of the menus of the remote control UI.

However, if the remote control UI is displayed on a touch screen in this way, the user may find it difficult to select a menu using a thumb while holding the electronic apparatus with one hand. For example, a malfunction may occur if the user selects a different menu instead of the one the user wants, or if the user touches the touch screen with something other than a user finger, such as his/her palm.

### [DISCLOSURE]

### [TECHNICAL SOLUTION]

According to an aspect of the present disclosure, an electronic apparatus includes a display, a communication interface configured to communicate with an external device, a memory storing first data for a remote control user interface (UI) and storing instructions, and one or more processors including processing circuitry. The instructions, when executed by the one or more processors individually or collectively, cause the electronic apparatus to detect a trigger manipulation on the display including at least one of a touching of the display or a drawing on the display, determine an initial touch point and a final touch point of a drawing trajectory of the trigger manipulation within the display, identify a partial region having a position and a shape corresponding to the trigger manipulation by extending the drawing trajectory to a boundary region of the display, display, using the display, the remote control UI in the partial region by accessing the first data for the remote control UI stored in the memory, and transmit, to the external device via the communication interface, a control signal corresponding to a user touch, based on the user touch being detected on the remote control UI.

According to an aspect of the present disclosure, a controlling method of an electronic apparatus includes detecting a trigger manipulation on the display including at least one of a touching of the display or a drawing on the display, determining an initial touch point and a final touch point of a drawing trajectory of the trigger manipulation within the display, identifying a partial region having a position and a shape corresponding to the trigger manipulation by extending the drawing trajectory to a boundary region of the display, displaying a remote control user interface (UI) in the identified partial region, and transmitting, to an external device, a control signal corresponding to a user touch based on the user touch being detected on the remote control UI.

Additional aspects may be set forth in part in the description which follows and, in part, may be apparent from the description, and/or may be learned by practice of the presented embodiments.

### [DESCRIPTION OF DRAWINGS]

The above and other aspects, features, and advantages of certain embodiments of the present disclosure may be more apparent from the following description taken in conjunction with the accompanying drawings, in which:
FIG. 1 is a diagram for describing an external device and an electronic apparatus for controlling the external device 200, according to at least one embodiment of the present disclosure;
FIG. 2 is a block diagram showing the electronic apparatus, according to at least one embodiment of the present disclosure;
FIGS. 3 to 5 are diagrams for describing a method for determining a partial region, according to at least one embodiment of the present disclosure;
FIGS. 6 and 7 are diagrams for describing a method for disposing a remote control user interface (UI) menu based on a size of the partial region, according to at least one embodiment of the present disclosure;
FIGS. 8 to 11 are diagrams for describing a method for displaying a remote control UI in the partial region, according to at least one embodiment of the present disclosure;
FIG. 12 is a diagram for showing the remote control UI in a scroll format, according to at least one embodiment of the present disclosure;
FIG. 13 is a diagram for describing the adjustment of a menu size, according to at least one embodiment of the present disclosure;
FIGS. 14 and 15 are diagrams for describing the adjustment of the position or recognition range of the menu, according to at least one embodiment of the present disclosure;
FIGS. 16 and 17 are diagrams for the placement of the remote control UI based on the partial region size, according to at least one embodiment of the present disclosure;
FIG. 18 is a diagram for showing the placement of the remote control UI based on a usage frequency, according to at least one embodiment of the present disclosure;
FIG. 19 is a diagram showing an example of the partial region, according to at least one embodiment of the present disclosure;
FIG. 20 is a block diagram for describing an example configuration of the electronic apparatus shown in FIG. 2, according to at least one embodiment of the present disclosure;
FIG. 21 is a flowchart for describing an operation of the electronic apparatus, according to at least one embodiment of the present disclosure; and
FIG. 22 is a flowchart for describing a controlling method of an electronic apparatus, according to at least one embodiment of the present disclosure.

### [BEST MODE]

General terms currently widely used may be selected as terms used in embodiments of the present disclosure in consideration of their functions in the present disclosure, and may be changed based on the intentions of those skilled in the art or a judicial precedent, the emergence of a new technique, or the like. In addition, terms arbitrarily chosen by the Applicant may be present. In such a case, the meanings of such terms may be mentioned in corresponding descriptions of the present disclosure. Therefore, the terms used in the present disclosure may be defined on the basis of the meanings of the terms and the contents throughout the present disclosure rather than simple names of the terms.

In the present disclosure, an expression "have", "may have", "include", "may include", or the like may indicate the presence of a corresponding feature (e.g., a numerical value, a function, an operation, or a component such as a part), and may not exclude the presence of an additional feature.

In the present disclosure, "A or/and B" may indicate "A" only, "B" only, "A or B", or "both of A and B".

Expressions "first", "second", or the like, used in the present disclosure may qualify various components regardless of a sequence or importance of the components. These expressions are used only to distinguish one component and another component from each other, and do not limit the corresponding components.

If any component (for example, a first component) is described as being "(operatively or communicatively) coupled with/to or connected to" another component (for example, a second component), it should be understood that any component may be directly coupled to another component or may be coupled to another component through yet another component (for example, a third component).

Here, a term of a singular number includes its plural number unless explicitly interpreted otherwise in the context. It should be understood that a term "include", "formed of" or the like used in the specification specifies the presence of features, numerals, steps, operations, components, parts or combinations thereof, which is mentioned in the specification, and does not preclude the presence or addition of one or more other features, numerals, steps, operations, components, parts or combinations thereof.

In the present disclosure, a "module" or a "~er/~or" may perform at least one function or operation, and be implemented by hardware, software, or a combination of hardware and software. In addition, a plurality of "modules" or a plurality of "~ers/ors" may be integrated in at least one module and implemented by at least one processor except for a "module" or an "~er/or" that needs to be implemented by specific hardware.

In the specification, a term "user" may refer to a person using an electronic apparatus or an apparatus (e.g., an artificial intelligence (AI) electronic apparatus) using the electronic apparatus.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of exemplary approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as, but not limited to, device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, or the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Hereinafter, an embodiment of the present disclosure is described in more detail with reference to the accompanying drawings.

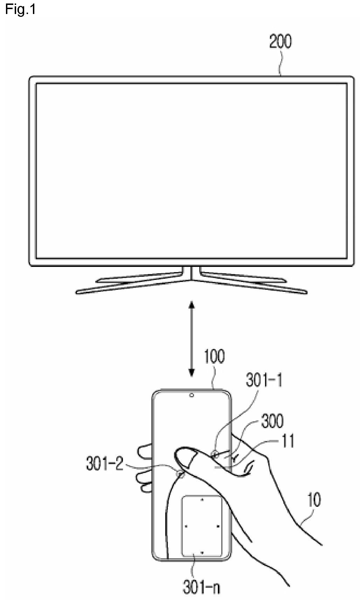

FIG. 1 is a diagram for describing an external device 200 and an electronic apparatus 100 for controlling the external device 200, according to at least one embodiment of the present disclosure. The external device 200 may be various types of electronic apparatuses. FIG. 1 shows a case where the external device 200 is implemented as a display device such as a television (TV). However, the present disclosure is not limited thereto, and, notably, the external device 200 may be any device capable of receiving a control signal via wireless communication, such as, but not limited to, an air conditioner, a washing machine, a computer, an electric fan, an air purifier, a wireless speaker, a beam projector, or the like. That is, while the various disclosures provided below may be based on a case where the external device 200 is the display device, aspects of the present disclosure may be applied to other types of external devices.

The external device 200 may be connected to the electronic apparatus 100 via the wireless communication. The external device 200 may perform an operation corresponding to the control signal based on the control signal received from the electronic apparatus 100.

The electronic apparatus 100 may be an apparatus connected to the external device 200.

The electronic apparatus 100 may be implemented as the various types of electronic apparatuses including a display. Alternatively or additionally, the electronic apparatus 100 may be described in any of various terms, such as, but not limited to, a mobile device, a user terminal device, a control device, or the like. The electronic apparatus 100 may be implemented in any of various devices such as, but not limited to, a smartphone, a tablet, a smart watch, a smart remote control. The various disclosures provided below may be based on a case where the electronic apparatus 100 is implemented as the smartphone, aspects of the present disclosure may be applied to other types of electronic apparatuses.

The electronic apparatus 100 may transmit the control signal to the external device 200 via a communication interface.

The electronic apparatus 100 may display a remote control user interface (UI) for controlling the external device 200 on a display 140. The remote control UI may be a UI screen including at least one menu for controlling the external device 200. Based on a user setting, the remote control UI may be generated in a size that may correspond to an entire display size of the electronic apparatus 100, or may be displayed in a size smaller than the entire display size. The present disclosure describes a region where the remote control UI is displayed as a partial region 300.

The electronic apparatus 100 may display the remote control UI in the partial region 300. The partial region 300 may be a region set by a user input.

For example, if a user touches the display with a thumb and then moves the same while holding the electronic apparatus 100 with his/her right hand as shown in FIG. 1, the electronic apparatus 100 may identify the partial region 300 based on such a user manipulation, and display the remote control UI in the identified partial region 300. In an embodiment, the partial region 300 may have a closed curve shape.

The user may generate the partial region 300 by an operation of touching the display 140 and then drawing on the same. Such a user action may be described in various terms such as, but not limited to, a trigger manipulation, a drawing manipulation, a touch and dragging manipulation, or the like. The electronic apparatus 100 may display the remote control UI in the partial region 300 having any size, position, and shape based on the user action if the user action is recognized. That is, the size, position, shape, or the like of the remote control UI may be determined to correspond to a drawing trajectory of the trigger manipulation.

Alternatively or additionally, the partial region 300 may be referred to as a certain region, a thumb zone, a specific region, a region for disposing the remote control UI, or the like, and is may be uniformly described as the partial region in the present disclosure.

The remote control UI may include a plurality of menus (e.g., a first menu 300-1, a second menu 300-2, to an n-th menu 300-n, where n is a positive integer greater than one (1)). The electronic apparatus 100 may store, in a memory, information on the plurality of menus 300-1 to 300-n to be displayed on the remote control UI. The stored information may include, but not be limited to, the display position, shape, size, a display color of each menu, a control code corresponding to each menu, and information on an entire remote control UI layout.

The plurality of menus 300-1 to 300-n may include, but not be limited to, a power button, a volume control button, a mute button, a channel change button, a numeric keypad, an arrow key, an OK button, or the like. However, the plurality of menus 300-1 to 300-n are not limited thereto, and may be configured differently based on a device and a purpose for which the menu is used, such as, but not limited to, a menu button, a setting button, a back button, a media control-related button, a special function, a smart function-related button, or the like.

The above-described examples are only examples to describe types of buttons that may be included in the remote control UI and are not necessarily limited to the above-described menus.

The type of the remote control UI and its menus may be stored differently for each type of the external device 200. For example, a configuration of the remote control UI may be different in a case where the user wants to control the TV and a case where the user wants to control the air conditioner.

The electronic apparatus 100 may transmit the control signal corresponding to a touched menu to the external device 200 if the user touches one of the plurality of menus 300-1 to 300-n displayed on the display of the electronic apparatus 100. The control signal may take various forms depending on a communication method between the electronic apparatus 100 and the external device 200. For example, the electronic apparatus 100 may generate and/or transmit the signal including the control code of the menu selected by the user according to a Bluetooth^{™} standard if the electronic apparatus 100 is connected to the external device 200 using a Bluetooth method. As another example, the electronic apparatus 100 may transmit an infrared (IR) signal or a radio frequency (RF) signal generated according to the control code if the electronic apparatus 100 includes an IR transceiver module or an RF transceiver module.

The external device 200 may perform the operation corresponding to the control signal based on the control signal received from the electronic apparatus 100.

The electronic apparatus 100 may not be a dedicated apparatus for controlling one external device 200. The electronic apparatus 100 may be an apparatus that controls various devices such as, but not limited to, TVs, computers, monitors, beam projectors, or the like.

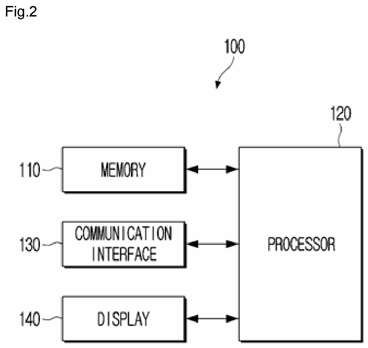

FIG. 2 is a block diagram showing the electronic apparatus, according to at least one embodiment of the present disclosure.

Referring to FIG. 2, the electronic apparatus 100 may include a processor 120, a memory 110, a communication interface 130, and the display 140.

The memory 110 may be implemented as an internal memory, such as, but not limited to, a read-only memory (ROM (e.g., an electrically erasable programmable read-only memory (EEPROM)), or a random access memory (RAM), included in at least one processor 120, or as a memory separate from at least one processor 120. The memory 110 may be implemented in the form of a memory embedded in the electronic apparatus 100 or in the form of a memory detachable from the electronic apparatus 100, based on a data storage purpose. For example, data for driving the electronic apparatus 100 may be stored in the memory embedded in the electronic apparatus 100, and data for an extension function of the electronic apparatus 100 may be stored in the memory detachable from the electronic apparatus 100.

The memory embedded in the electronic apparatus 100 may be implemented as at least one of a volatile memory (e.g., dynamic RAM (DRAM), static RAM (SRAM) or synchronous dynamic RAM (SDRAM)) or a non-volatile memory (e.g., one time programmable ROM (OTPROM), programmable ROM (PROM), erasable and programmable ROM (EPROM), electrically erasable and programmable ROM (EEPROM), a mask ROM, a flash ROM, a flash memory (e.g., NAND flash or NOR flash), a hard drive, or a solid state drive (SSD)). The memory detachable from the electronic apparatus 100 may be implemented as a memory card (e.g., compact flash (CF), secure digital (SD), micro secure digital (Micro-SD), mini secure digital (mini-SD), extreme digital (xD), or multi-media card (MMC)), an external memory which is capable of being connected to a universal serial bus (USB) port (e.g., USB memory), or the like. However, the present disclosure is not limited in this regard, and the memory 110 may be implemented in various forms without departing from the scope of the present disclosure.

The memory 110 may store at least one instruction. The processor 120 may perform various operations based on the instruction stored in the memory 110.

The processor 120 may be implemented as a digital signal processor (DSP), a microprocessor, or a time controller (TCON), which processes a digital signal. However, the processor 120 is not limited thereto, may include at least one of a central processing unit (CPU), a micro controller unit (MCU), a micro processing unit (MPU), a controller, an application processor (AP), a graphics-processing unit (GPU), a communication processor (CP), or an advanced reduced instruction set computer (RISC) machine (ARM) processor, or may be defined by these terms. The processor 120 may be implemented as a system-on-chip (SoC) or a large scale integration (LSI), in which a processing algorithm is embedded, or may be implemented in the form of a field programmable gate array (FPGA). The 120 may perform various functions by executing computer executable instructions stored in the memory. In an embodiment, the processor 120 may include one or more processors that may execute by the computer executable instructions, individually or collectively, to perform one or more embodiments of the present disclosure.

The communication interface 130 is a component for communicating with various types of external devices by using various types of communication methods. The communication interface 130 may include, but not be limited to, a wireless communication module or a wired communication module. Each communication module may be implemented in the form of at least one hardware chip.

The wireless communication module may be a module communicating with the external device using a wireless method. For example, the wireless communication module may include, but not be limited to, at least one of a wireless-fidelity (Wi-Fi) module, a Bluetooth^{™} module, an infrared communication module, or another communication module.

The Wi-Fi module and the Bluetooth module may perform the communication by using a Wi-Fi method and the Bluetooth method, respectively. In case of using the Wi-Fi module or the Bluetooth module, the communication interface 130 may first transmit and receive various connection information, such as a service set identifier (SSID) and a session key, and connect the communication by using the connection information to thus transmit and receive various information.

The infrared communication module may perform the communication based on infrared data association (IrDA) technology for transmitting data in a short distance using the wireless method by using an infrared ray between visible light and millimeter waves.

In addition to the above-described communication methods, another communication module may include at least one communication chip for performing the communication according to various wireless communication standards such as zigbee, third generation (3G), third generation partnership project (3GPP), long term evolution (LTE), LTE advanced (LTE-A), fourth generation (4G), and fifth generation (5G).

The wired communication module may be a module for communicating with the external device using the wired method. For example, the wired communication module may include at least one of a local region network (LAN) module, an Ethernet module, a pair cable, a coaxial cable, an optical fiber cable, or an ultra wide-band (UWB) module.

According to various embodiments, the communication interface 130 may use the same communication module (e.g., Wi-Fi module) to communicate with the external device such as a remote control device or an external server.

According to the various embodiments, the communication interface 130 may use different communication modules to communicate with the external device such as the remote control device or the external server. For example, the communication interface 130 may use at least one of the Ethernet module or the Wi-Fi module to communicate with the external server, and may use the Bluetooth module to communicate with the external device such as the remote control device. However, this case is only an embodiment, and the communication interface 130 may use at least one communication module among various communication modules in case of communicating with the plurality of external devices or the external server.

The display 140 may be implemented as various types of displays such as a liquid crystal display (LCD), an organic light emitting diode (OLED) display, or a plasma display panel (PDP). The display 140 may include a driving circuit, a backlight unit, and the like, which may be implemented in a form such as an amorphous silicon thin film transistor (a-si TFT), a low temperature poly silicon (LTPS) TFT, or an organic TFT (OTFT).

The display 140 may be implemented as a touch screen coupled with a touch sensor, a flexible display, a three-dimensional (3D) display, or the like.

The display 140 may display various screens under control of the processor 120. For example, the display 140 may display the remote control UI for controlling the external device 200.

The processor 120 may classify an entire region of the display 140 into the partial region 300 for displaying the remote control UI and the other regions (e.g., remaining regions) if an event that requires displaying the remote control UI occurs. The event may include an event in which the user touches an icon corresponding to a remote control application, an event in which the user touches and draws on any point within the display is detected, an event in which the electronic apparatus 100 is turned on or reset, an event in which the external device 200 is turned on, or the like. The processor 120 may specify the partial region 300 having various sizes, positions, and shapes based on a position of the trigger manipulation, or the like if the trigger manipulation is detected. Alternatively or additionally, for the remaining event, the position of the partial region 300 may be specified as the same position where the remote control UI is previously displayed.

The description provided below is based on a case where the trigger manipulation is detected.

The processor 120 may detect the touch within the display 140. That is, a plurality of electrodes disposed within the display 140 may output electric signals having different magnitudes than before the touch if the user touches the display 140 with a finger, a touch pen, or the like. The processor 120 may identify a changed point as a touch point if a change in the electric signal output from the plurality of electrodes is detected. The processor 120 may detect a movement trajectory if the user moves the touch point while maintaining a touch state. The present disclosure may indicate the movement trajectory as the drawing trajectory, and the movement trajectory may alternatively be described in various ways, such as, but not limited to, a dragging trajectory, a manipulation trajectory, a user motion, or the like.

The memory 110 may store at least one instruction for controlling the processor 120. In addition, the memory 110 may store data for the remote control UI for controlling the external device.

The remote control UI may be and/or may include a visual element, such as, but not limited to, the icon or the button, displayed on a screen of the display 140 to control the external device 200. The remote control UI may include the plurality of menus 300-1 to 300-n.

The data for the remote control UI may include various data on a remote control UI design, the plurality of menus, or the like. In addition, the memory 110 may store information on the control code corresponding to each menu.

The processor 120 may perform overall control operations of the electronic apparatus 100. According to an embodiment, the processor 120 may detect the trigger manipulation of touching the display 140 and drawing on the same.

That is, the user may touch the display 140 by spreading the thumb and moving the touch point while holding the electronic apparatus 100 with one hand as shown in FIG. 1. In such a case, the drawing trajectory may be identified as a roughly curved shape based on a held position. The processor 120 may recognize that the trigger manipulation is input if the drawing trajectory of a certain length or more is identified. Accordingly, the remote control UI may be displayed by determining the partial region as described above.

The user may control the external device by touching the menu displayed within the remote control UI if the remote control UI is displayed on the display 140.

However, the trigger manipulation is not limited thereto, and the user may also touch a trigger input menu displayed on the display 140 and then input the drawing trajectory. Alternatively or additionally, the trigger manipulation may occur if the user presses a region reset button while using the remote control after launching the remote control application. The description provided below is based on an embodiment in which the operation is performed by identifying this input as the trigger manipulation if the user inputs the drawing manipulation while a standby screen or an execution screen of any application is displayed.

The processor 120 may identify the partial region (partial area) 300 based on the drawing trajectory of the trigger manipulation if the trigger manipulation of touching the display and drawing on the same is detected. The processor 120 may identify the partial region (partial area) having the position and shape corresponding to the trigger manipulation by extending the drawing trajectory of the trigger manipulation to a boundary region of the display based on an initial touch point or a final touch point within the entire region of the display.

As an example, the processor 120 may extend the drawing trajectory to the boundary region while maintaining the drawing trajectory of the user trigger manipulation.

For example, the processor 120 may extend the drawing trajectory of the user trigger manipulation to the boundary region while transforming the same into a smooth curve shape.

As another example, the processor 120 may select at least one point in the drawing trajectory of the trigger manipulation and then extend the drawing trajectory to the boundary region based on at least one point.

However, the present disclosure is not limited thereto, and the entire region of the display 140 may be set to be segmented into various sizes, positions, shapes, or the like. For example, the processor 120 may also set the partial region closest to a user trigger manipulation range among a plurality of divisible partial regions as a remote control UI display region.

The processor 120 may control the display 140 to display the remote control UI in the identified partial region. The partial region 300 may be generated if the user inputs a touch signal.

In addition, the partial region 300 may be adjusted based on the touch position, touch frequency, or the like of the user as the user uses the electronic apparatus 100. In an embodiment, the partial region 300 may be the entire or partial region of the display 140. The partial region 300 may have the closed curve shape including various shapes such as, but not limited to, a straight line, an elliptic curve, or the like.

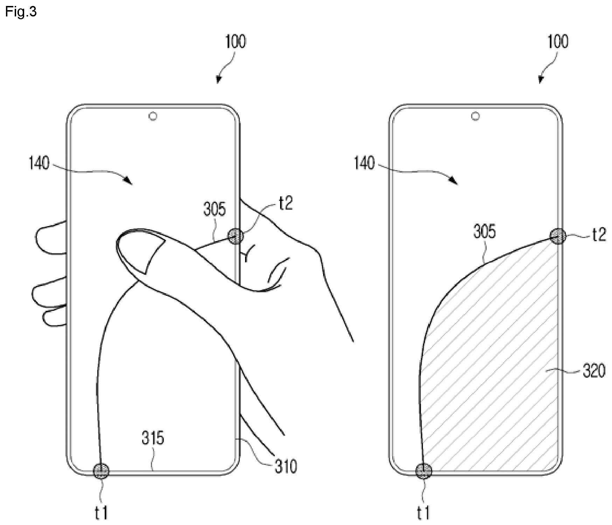

The acquiring of the partial region 300 is described with reference to FIGS. 3 to 5.

The processor 120 may control the display 140 to display the remote control UI for controlling the external device 200 in the identified partial region.

The remote control UI may include various menus such as, but not limited to, the power button, the menu button, a channel control button, the volume control button, a home button, the setting button, an arrow key button, or the like.

The processor 120 may determine the size, position, layout, or type of the plurality of menus 300-1 to 300-n differently based on the shape, size, position, or the like of the partial region 300.

The processor 120 may transmit the control signal corresponding to the user touch on the remote control UI to the external device 200 through the communication interface 130.

The external device 200 may control the external device 200 based on the control signal transmitted from the electronic apparatus 100.

The processor 120 may generate the partial region 300 based on the user trigger manipulation.

According to an embodiment, the processor 120 may identify the partial region 300 based on at least one of the entire region size of the display, the initial touch point of the trigger manipulation, the final touch point of the trigger manipulation, a length of the drawing trajectory, a curvature of the drawing trajectory, or the shape of the drawing trajectory.

FIGS. 3 to 5 are diagrams for describing a method for determining the partial region, according to at least one embodiment of the present disclosure. The method for determining the partial region described with reference to FIGS. 3 to 5 may be performed by the electronic apparatus 100.

FIG. 3 shows the drawing trajectory of the trigger manipulation from a first point t1 on a lower boundary region 310 of the display 140 of the electronic apparatus 100 to a second point t2 on a right boundary region 315.

In an embodiment, the processor 120 may identify a partial region 320 from the entire display region based on a closed curve formed by a drawing trajectory 305 connecting the first point t1 with the second point t2.

FIG. 3 shows a case where a region spanning the lower boundary region 315 and the right boundary region 315 of the display 140 is identified as the partial region 320. The left and upper sides of the partial region 320 may have a curved shape similar to the drawing trajectory.

In an embodiment, if the user does not draw to an end of the boundary region, the processor 120 may identify the partial region 320 by extending the drawing trajectory to the boundary region based on the initial touch point and final touch point of the drawing trajectory.

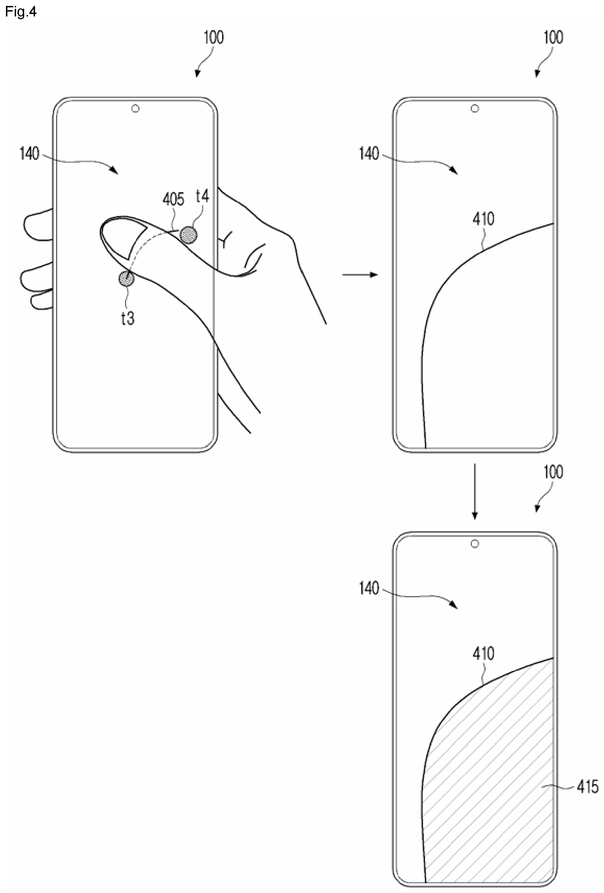

FIG. 4 shows a case where the drawing trajectory of the trigger manipulation extends from a third point t3 on the display to a fourth point t4 rather than extending to the boundary region of the display 140 of the electronic apparatus 100.

In an embodiment, the processor 120 may identify a partial region 415 having a position and shape corresponding to the trigger manipulation by extending the drawing trajectory to a boundary region 410 based on the third point t3, which may be the user initial touch point, and the fourth point t4, which may be the final touch point.

That is, the processor 120 may extend a drawing trajectory 405 input by the user based on its curvature or inclination to identify the closed curve extending to the boundary region and distinguish the partial region and the remaining region based on the closed curve. That is, the processor 120 may identify the partial region based on the entire region size of the display, the initial and final touch points of the trigger manipulation, the shape of the drawing trajectory, or the like.

It may be assumed that the drawing trajectory 405 is a part of an ellipse. The processor 120 may calculate the curvature of the drawing trajectory 405, and identify the ellipse that includes the drawing trajectory 405 based thereon. The processor 120 may identify the partial region 415 based on the identified ellipse and the entire region size of the display.

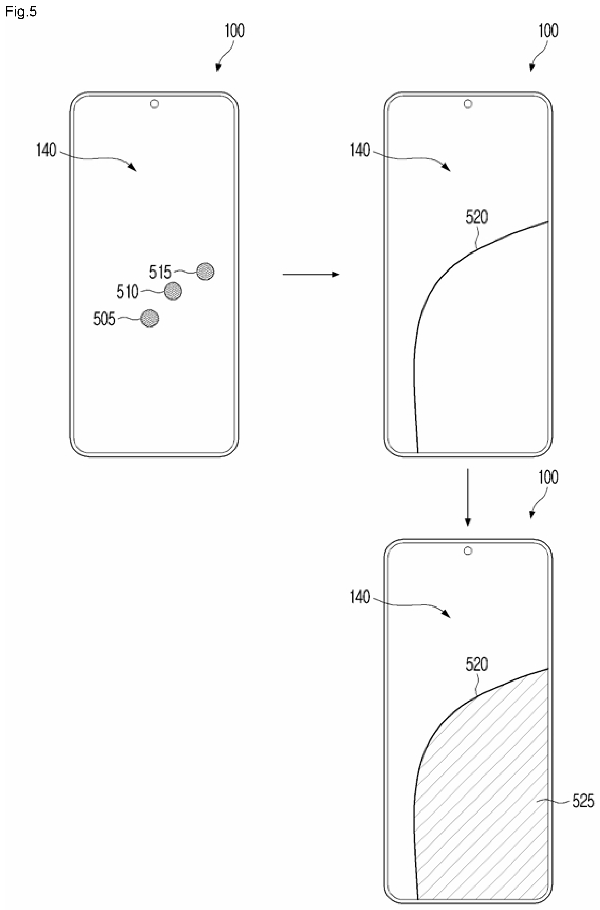

FIG. 5 shows a case where the trigger manipulation is input in the form of a plurality of touch points (e.g., a first touch point 505, a second touch point 510, and a third touch point 515) on the display 140 of the electronic apparatus 100, according to at least one embodiment of the present disclosure. That is, the user may input the trigger manipulation by sequentially touching the plurality of touch points 505 to 515 instead of drawing in a single line.

The processor 120 may acquire a drawing trajectory 520 based on coordinates of the plurality of touch points 505 to 515. In addition, the processor 120 may calculate a curvature of the ellipse based on the drawing trajectory and identify a partial region 525 based thereon.

Therefore, the size, position, shape, or the like of the partial region may be changed based on the drawing trajectory. The processor 120 may generate the remote control UI based on the size, position, shape, or the like of the partial region, and the placement position, size, or the like of the menu therein may thus be ultimately changed based on the drawing trajectory.

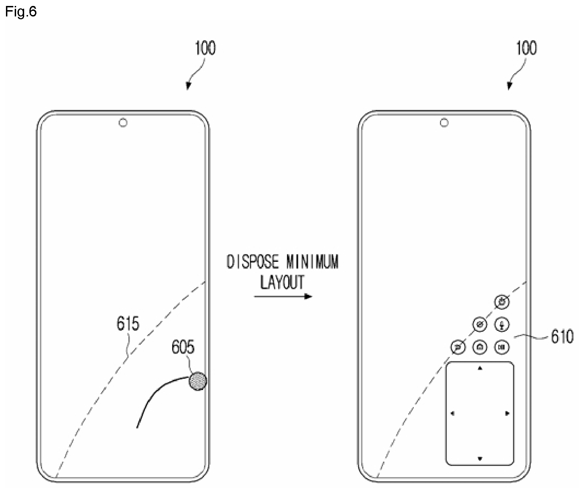

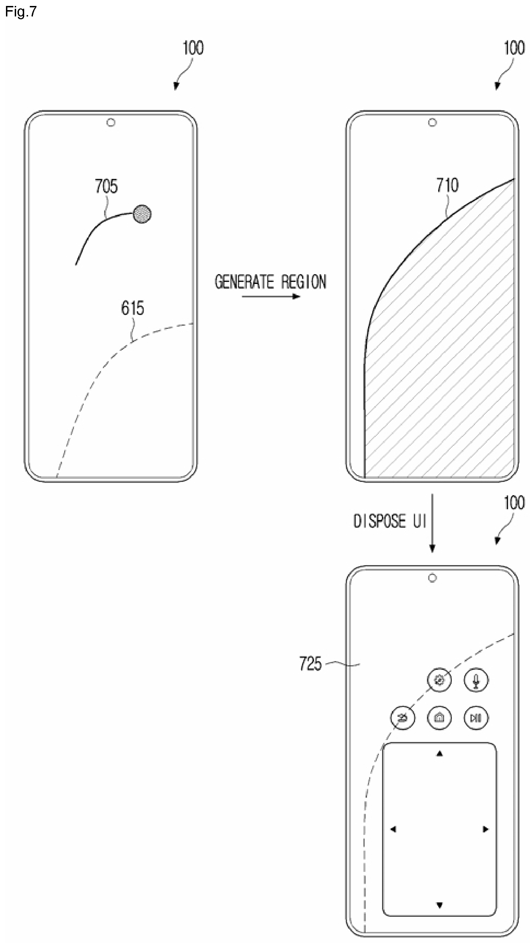

FIGS. 6 and 7 are diagrams for describing a method for disposing a remote control user interface (UI) menu based on the partial region size, according to at least one embodiment of the present disclosure. The method for disposing the remote control UI menu described with reference to FIGS. 6 and 7 may be performed by the electronic apparatus 100.

FIG. 6 shows a case where the user inputs the trigger manipulation to specify a region smaller than the entire size of the display. The processor 120 may apply the type, position, size, shape, order, or the like of the menu included in the remote control UI differently in a case where the partial region of a predetermined threshold range is identified and a case where the partial region more than the threshold range is identified.

FIG. 6 shows a method for disposing the remote control UI menu if the partial region size acquired based on the user trigger manipulation is the threshold range.

The processor 120 may display a remote control UI 610 having a size and shape corresponding to a threshold range 615 on the display if the size of the identified partial region is the threshold range 615 or less. That is, if the size of the identified partial region is the threshold range 615 or less, the minimum remote control UI 610 having the same size and shape may be displayed regardless of the size of the drawing trajectory. The minimum remote control UI 610 may be described in various terms such as, but not limited to, a basic UI, a default UI, a standard UI, or the like.

FIG. 6 shows a state where the minimum remote control UI 610 having a size and shape corresponding to the threshold range is displayed. However, the minimum remote control UI 610 is not limited thereto, and may be displayed as a minimum remote control having a square shape. The threshold range 615 may be a minimum size range in which the remote control UI may be disposed. The threshold range 615 may be determined based on an area of the partial region, a size ratio of the partial region relative to the entire region size of the display, or the like.

The memory 110 may store a criterion for determining the threshold range 615 and data on a method for displaying the remote control UI if the partial region size generated by the user trigger manipulation is the threshold range.

In addition, the memory 110 may store information on the menu type of the remote control UI to be displayed on the display 140, its menu size, the position where the remote control UI is to be disposed, or the like if the partial region size is the threshold range.

As an example, for the threshold range, it may be assumed that a ratio of the partial region size relative to the entire region size of the display is 0.25. In an embodiment, the processor 120 may identify that the partial region is smaller than the threshold range if the identified partial region size is 0.15 of the entire region size based on a user drawing trajectory 605. In an embodiment, the processor 120 may display the remote control UI 610 having the size and shape corresponding to the threshold range, rather than displaying the remote control UI in the partial region generated by the user drawing trajectory 605.

In an embodiment, the criterion for determining the threshold range and the remote control UI having the size and shape corresponding to the threshold range are only examples, and the present disclosure is not limited to the above-described method.

FIG. 7 shows a method for disposing the remote control UI menu if the partial region size acquired based on the user trigger manipulation is the threshold range or more, according to an embodiment.

According to an embodiment of the present disclosure, the processor 120 may control the display to display a remote control UI 725 having a size and shape corresponding to the identified partial region if a size of the identified partial region 710 is the threshold range 615 or more based on a drawing trajectory 705.

The processor 120 may identify whether the partial region 710 corresponding to the drawing trajectory 705 is the threshold range or more based on the criterion for determining the threshold range stored in the memory 110 if the drawing trajectory 705 is input.

The processor 120 may display the remote control UI based on the partial region 710 if the partial region 710 corresponding to the drawing trajectory 705 is identified as being the threshold range or more.

The plurality of threshold ranges may be set, according to an embodiment. For example, the minimum remote control UI may be displayed if the partial region is the minimum threshold range, and the remote control UI may be displayed on the entire display if the partial region is the maximum threshold range or more. Alternatively or additionally, the remote control UI having the size and shape corresponding to the drawing trajectory 705 may be displayed for the drawing trajectory between the minimum threshold range and the maximum threshold range.

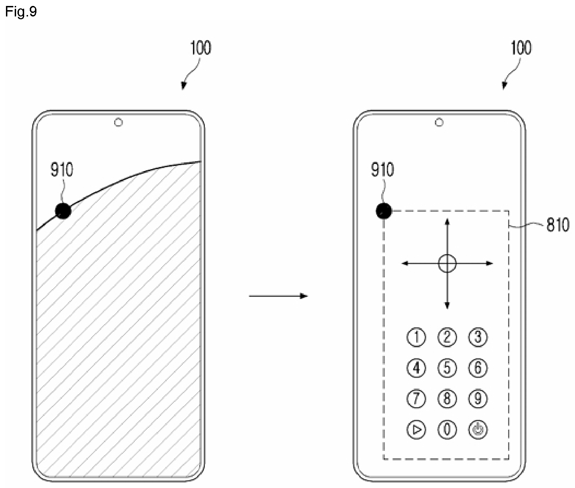

The method for displaying the remote control UI 725 having the size and shape corresponding to the identified partial region is described with reference to FIGS. 9 to 12.

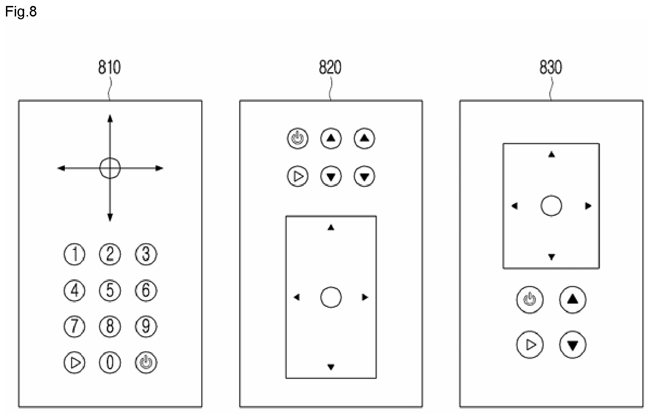

FIGS. 8 to 11 are diagrams for describing a method for displaying the remote control UI in the partial region, according to at least one embodiment of the present disclosure. The method for displaying the remote control UI in the partial region described with reference to FIGS. 8 to 11 may be performed by the electronic apparatus 100.

According to an embodiment of the present disclosure, the memory 110 may store data for the plurality of menus for the remote control of the external device. In addition, the memory 110 may store data for layout for arranging and displaying the plurality of menus within the remote control UI.

The plurality of menus may indicate the plurality of menus included in the remote control UI. The plurality of menus may include, but not be limited to, the power button, a number button, the arrow key, the channel control button, the volume control button, the arrow key, or the like. The memory 110 may store data on the type, size, shape, or the like of the plurality of menus.

FIG. 8 is a diagram for describing the layout for the plurality of menus 300-1 to 300-n within the remote control UI, according to an embodiment.

According to an embodiment, the memory 110 may store the layout data for arranging and displaying the plurality of menus 300-1 to 300-n within the remote control UI.

In an embodiment, the layout may indicate a method for arranging the plurality of menus 300-1 to 300-n included in the remote control UI on the display 140. The processor 120 may arrange the plurality of menus 300-1 to 300-n based on the position, size, and shape of the partial region 300. In an embodiment, the information on the position, size, and shape of the plurality of menus 300-1 to 300-n based on the partial region 300 may be stored in the memory 110.

FIG. 8 shows an example of the remote control UI layout, according to at least one embodiment of the present disclosure.

The processor 120 may determine the remote control UI layout based on the size, shape, and position of the partial region 300.

In an embodiment, the layout may indicate an entire design of the remote control UI, such as, but not limited to, the type, arrangement, size, shape, spacing, color, or the like of the menu, included in the remote control UI.

The remote control UI layout may be determined differently based on the partial region size, a menu usage frequency, the menu type, the menu size, and the menu shape. FIG. 8 is an example of the remote control UI layout determined by the partial region size and the menu type.

Referring to a first embodiment 810 of FIG. 8, the remote control UI layout may include a number pad, the power button, the menu button, the arrow key button, and the OK button. In addition, the processor 120 may set the corresponding layout to be displayed if the partial region size is relatively large.

Referring to a second embodiment 820 of FIG. 8, the remote control UI layout may include the power button, the channel control button, the volume button, the menu button, the arrow key button, and the OK button. In addition, the processor 120 may set the corresponding layout to be displayed if the partial region size is relatively small.

Referring to a third embodiment 830 of FIG. 8, the remote control UI layout may include the arrow key button, the OK button, the volume control button, the power button, and the menu button. Here, the processor 120 may set the corresponding layout to be displayed if the partial region size is the threshold range.

The first to third embodiments 810 to 830 of FIG. 8 are only examples of a layout configured based on the type of the plurality of menus, the partial region size, and the menu usage frequency, and the present disclosure is not limited to the above-described examples.

FIG. 9 is a diagram showing the placement of the remote control UI if the size of the partial region 300 is relatively large, according to at least one embodiment of the present disclosure.

According to an embodiment of the present disclosure, the processor 120 may determine a first reference point 910 within the partial region.

The first reference point 910 may be a reference point for displaying the remote control UI layout stored in the memory 110 on the display.

In an embodiment, at least one reference point 910 may be disposed on the drawing trajectory. The at least one reference point 910 may be determined by various criteria such as, but not limited to, the initial touch point of the trigger manipulation, the final touch point of the trigger manipulation, a midpoint of a user motion range, or the like.

In addition, the first reference point 910 may also be disposed in the partial region 300. In an embodiment, the processor 120 may dispose the remote control UI based on the reference point disposed in the partial region.

The processor 120 may control the display device to display the remote control UI including the plurality of menus within the identified partial region based on the first reference point 910 and the layout data as shown in the first embodiment 810.

In an embodiment, the processor 120 may display the remote control UI by using a method for disposing one of the plurality of menus included in the remote control UI on at least one reference point and then arranging the remaining menus. In addition, the processor 120 may display the remote control UI by using a method for matching at least one reference point with a point in the remote control UI layout.

In an embodiment, the processor 120 may dispose the remote control UI by using various methods, such as, but not limited to, disposing the menu on the plurality of reference points.

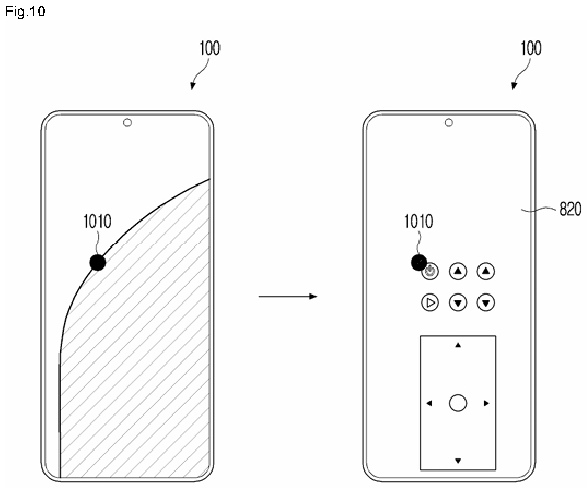

FIG. 10 is a diagram showing the placement of the remote control UI if the size of the partial region 300 is relatively small, according to at least one embodiment of the present disclosure.

The processor 120 may determine the remote control UI layout based on the partial region size. In an embodiment, the processor 120 may determine the remote control UI layout based on the partial region size as shown in the second embodiment 820 of FIG. 8.

The processor 120 may display the remote control UI in the partial region based on the layout 820 of the remote control UI determined based on a second reference point 1010 and the partial region size.

In an embodiment, the processor 120 may also display the remote control UI by using a method of determining the plurality of reference points and then arranging the plurality of menus on the plurality of reference points, respectively.

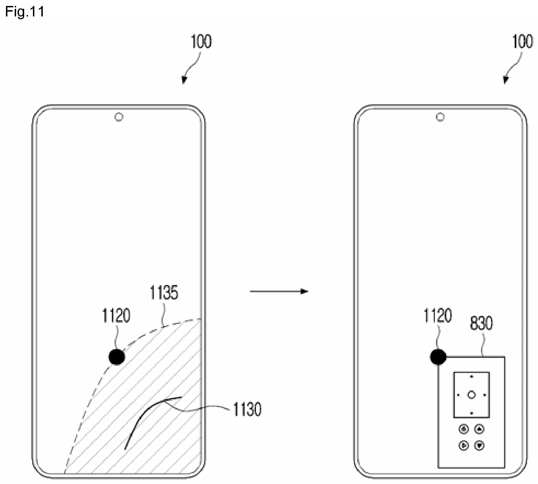

FIG. 11 is a diagram showing the placement of the remote control UI if the size of the partial region 300 is the threshold range, according to at least one embodiment of the present disclosure.

The processor 120 may identify whether the partial region size generated by a trigger manipulation 1130 is the threshold range. The processor 120 may determine the minimum range for displaying the remote control UI if the partial region size generated by the trigger manipulation 1130 is the threshold range. The processor 120 may determine a third reference point 1120 on the minimum range.

In addition, the processor 120 may determine the remote control UI corresponding to the case where the partial region size generated by the trigger manipulation 1130 is the threshold range. In an embodiment, the processor 120 may determine the third embodiment 830 of FIG. 8 as the remote control UI.

The processor 120 may dispose the remote control UI based on the determined the remote control UI layout and the third reference point 1120.

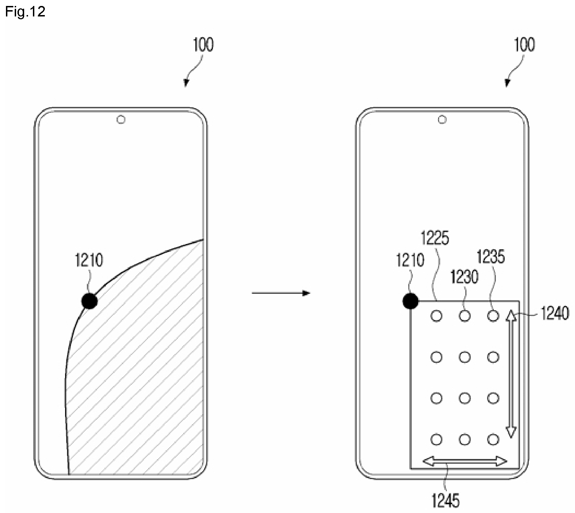

FIG. 12 is a diagram for showing the remote control UI in a scroll format, according to at least one embodiment of the present disclosure.

Referring to FIG. 12, the processor 120 may determine a fourth reference point 1210 in the partial region.

The processor 120 may dispose a remote control UI 1225 in the scroll format based on the fourth reference point 1210. In an embodiment, the remote control UI in the scroll format may include a plurality of menus (e.g., a first menu 1230 and a second menu 1235). In addition, the remote control UI in the scroll format may move the menu through a vertical scroll 1240 and a horizontal scroll 1245.

FIG. 12 shows a method for scrolling the plurality of menus and displaying the same on the display, and the present disclosure is not limited thereto.

In an embodiment, the memory 110 may store at least one remote control UI layout. In an embodiment, it may be assumed that the first embodiment 810, second embodiment 820, and third embodiment 830 of FIG. 8 are stored in the memory. The processor 120 may display the first layout 810 of at least one remote control UI layout on the display. In an embodiment, the processor 120 may change the remote control UI layout through the user input.

In addition, the processor 120 may change a part of the layout through the user input.

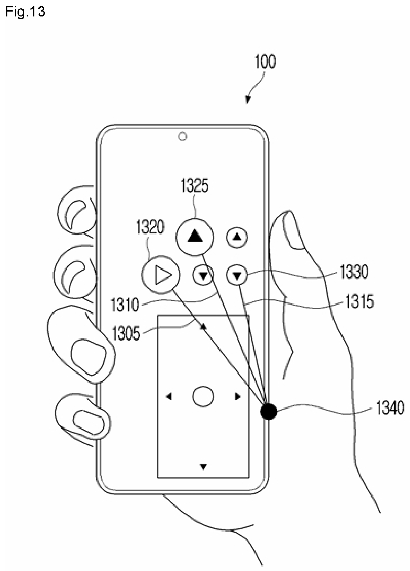

FIG. 13 is a diagram for describing the adjustment of the menu size, according to at least one embodiment of the present disclosure.

According to an embodiment of the present disclosure, the processor 120 may adjust the recognition range or the size of the menu in proportion to a distance between a hold point and the menu included in the remote control UI.

According to an embodiment of the present disclosure, the processor 120 may estimate a point in the partial region as a user hold point 1340. The user hold point may be a point corresponding to a joint of a user finger 11. In addition, the processor 120 may estimate the user hold point 1340 as a vertex of the display in the partial region.

The processor 120 may increase the size or touch recognition range of a menu among the plurality of menus (e.g., a first menu 1320, a second menu 1325, and a third menu 1330) that has a greater distance (e.g., a first distance 1305, a second distance 1310, or a third distance 1315) from a hold point relatively to the remaining menus.

In an embodiment, the menu size may indicate a menu size that is visually displayed on the display. The recognition range may indicate a touch range for recognizing the corresponding menu if the user touches the menu.

In an embodiment, the processor 120 may increase both the menu size and the recognition range, or increase only the recognition range of the menu.

FIG. 13 shows that the remote control UI is displayed on the display based on the partial region. The remote control UI may include the plurality of menus 1320 to 1330. In an embodiment, the processor 120 may estimate the user hold point 1340, and identify the distances 1305 to 1315 between each of the plurality of menus and the hold point. In an embodiment, the processor 120 may identify that the first menu 1320 and the second menu 1325 are relatively farther from the hold point than the third menu 1330.

In an embodiment, the processor 120 may control the display to increase the menu sizes or recognition ranges of the first menu 1320 and the second menu 1325 to be greater than the menu size or recognition range of the third menu 1330.

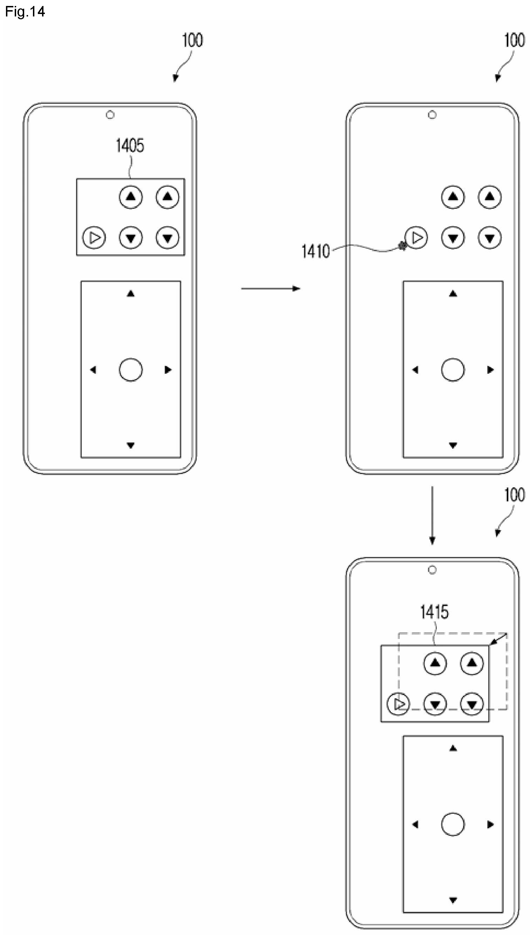

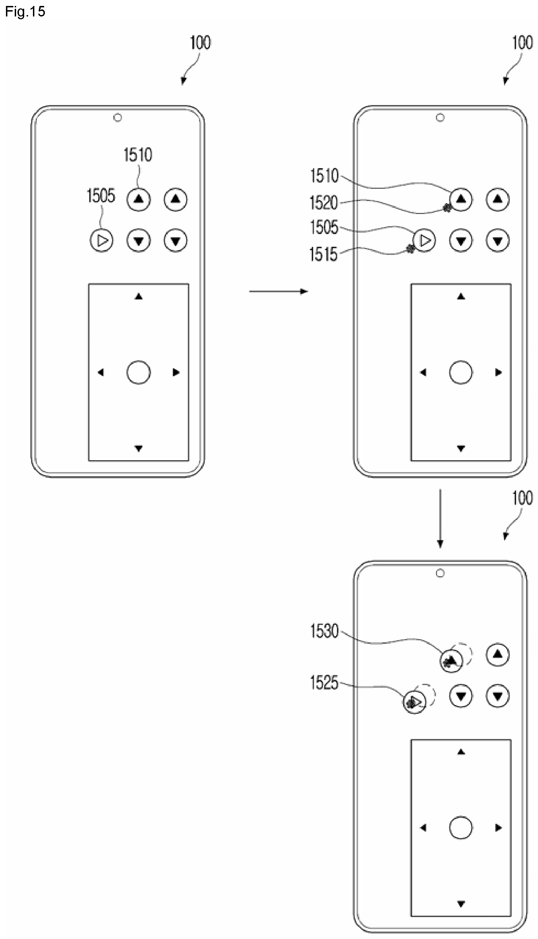

FIGS. 14 and 15 are diagrams for describing the adjustment of the position or recognition range of the menu, according to at least one embodiment of the present disclosure.

FIG. 14 is a diagram showing a method for adjusting the position or the recognition range of the plurality of menus based on a user touch detection position.

According to an embodiment of the present disclosure, the processor 120 may adjust the display position or touch recognition range of the entire plurality of menus if the user touch detection position on each of the plurality of menus is detected to deviate by a predetermined distance or more from the reference point of each menu a predetermined number of times or more.

FIG. 14 shows that the remote control UI is displayed on the display based on the partial region. In an embodiment, the remote control UI may include the plurality of menus 1405. In addition, the user may touch one of the plurality of menus (operation 1410). The processor 120 may detect the user touch and acquire the detection position.

In an embodiment, the user touch detection position may deviate from the reference point of the menu by the predetermined distance or more. The processor 120 may adjust the position or recognition range of the entire plurality of menus toward the touch detection position deviating from the reference point by the predetermined distance or more if the touch detection position is detected to deviate by the predetermined distance or more from the reference point the predetermined number of times or more (operation 1415).

FIG. 15 is a diagram showing a method for adjusting the position or recognition range of each menu based on the user touch detection position.

In an embodiment, the remote control UI may include the plurality of menus. The processor 120 may adjust the display position or touch recognition range of the menu based on a user touch detection position if the detection position (e.g., a first detection position 1515 or a second detection position 1520) on one of a plurality of menus (e.g., a first menu 1505 and a second menu 1510) deviates from the reference point of the menu by the predetermined distance or more (e.g., a first distance 1525 or a second distance1530).

According to an embodiment of the present disclosure, the processor 120 may adjust at least one of the size, position, shape, or touch recognition range of the menu based on the touch frequency for each of the plurality of menus.

As an example, the processor 120 may increase a size of a menu having a relatively high touch frequency. In addition, the processor 120 may determine a position of the menu having the relatively high touch frequency to be close to the user hold point. In addition, the processor 120 may increase the touch recognition range of the menu having the relatively high touch frequency.

The processor 120 may include the menu having the relatively high touch frequency in case of determining the remote control UI layout. As an example, it is assumed that the plurality of menus includes the power button, the volume control button, the channel control button, and the number button, and the power button, the volume control button, and the channel control button have the relatively high touch frequency.

The processor 120 may display, on the display, the power button, the volume control button, and the channel control button, which have the relatively high touch frequency if only three menus are capable of being displayed on the display based on the partial region size.

In an embodiment, the plurality of menus included in the remote control UI layout may be determined based on the touch frequency for the menu, as well as the menu size, content displayed on the external device, and the type of electronic apparatus that is a remote control target.

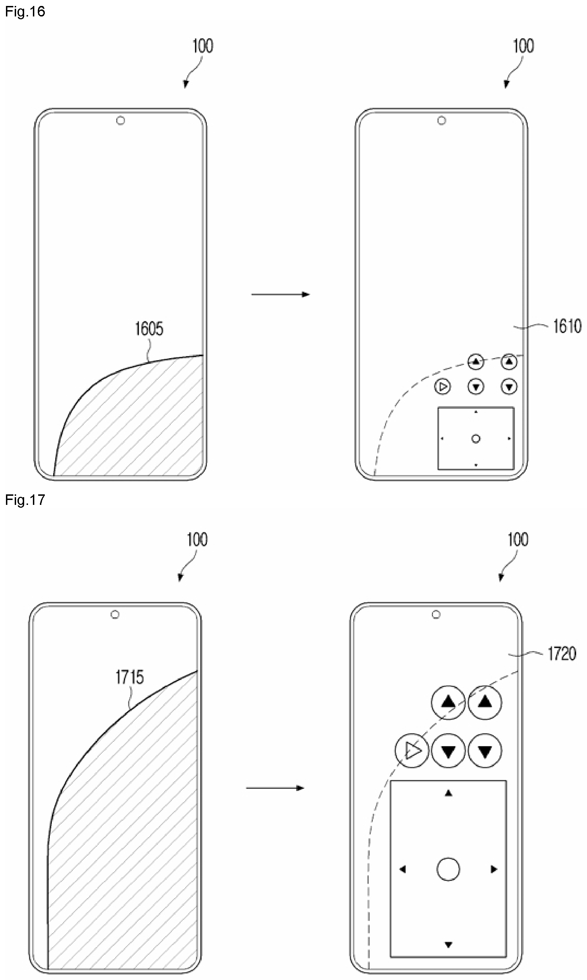

FIGS. 16 and 17 are diagrams for the placement of the remote control UI based on the partial region size, according to at least one embodiment of the present disclosure.

According to an embodiment of the present disclosure, the memory 110 may include data for the plurality of remote control UI layouts. The remote control UI layout may indicate an overall remote control UI design.

In an embodiment, the data for the plurality of layouts may include information on the remote control UI design, as well as information on the size, position, and shape of the menu based on the size of the partial region 300.

The processor 120 may display the remote control UI in one of the plurality of layouts based on the size of the partial region 300.

FIG. 16 is a diagram showing the remote control UI if a partial region 1605 has a relatively small size.

Referring to FIG. 16, the processor 120 may determine one remote control UI layout among the plurality of remote control UI layouts based on the partial region 1605. In addition, the processor 120 may display the determined remote control UI layout on the display based on the position and size of the partial region 1605.

The processor 120 may determine a size of the remote control UI layout based on the data stored in the memory 110. In an embodiment, the processor 120 may determine the size of the remote control UI layout to be relatively small (operation 1610).

In an embodiment, the processor 120 may also determine the size of the plurality of menus included in the remote control UI layout to be relatively small. The plurality of menus included in the remote control UI layout may be determined in proportion to the size of the remote control UI layout.

FIG. 17 is a diagram showing the remote control UI if a partial region 1715 has a relatively large size.

The processor 120 may determine the remote control UI layout corresponding to the size and position of the partial region 1715. The processor 120 may display the determined remote control UI layout on the display 140.

The processor 120 may determine the remote control UI layout based on the size of the partial region 1715. The processor 120 may display a determined remote control UI layout on the display (operation 1720).

In an embodiment, the processor 120 may determine the remote control UI layout to be relatively large. The size of the plurality of menus included in the remote control UI layout may be determined in proportion to the size of the remote control UI layout.

However, the size of the plurality of menus may be determined uniformly based on the position and size of the partial region as described above, and may also be determined differently for each menu.

According to an embodiment of the present disclosure, the memory 110 may store data on the size and position of each of the plurality of menus included in the remote control UI that corresponds to the shape of the partial region.

In addition, the processor 120 may display the remote control UI on the display based on the partial region and the data stored in the memory.

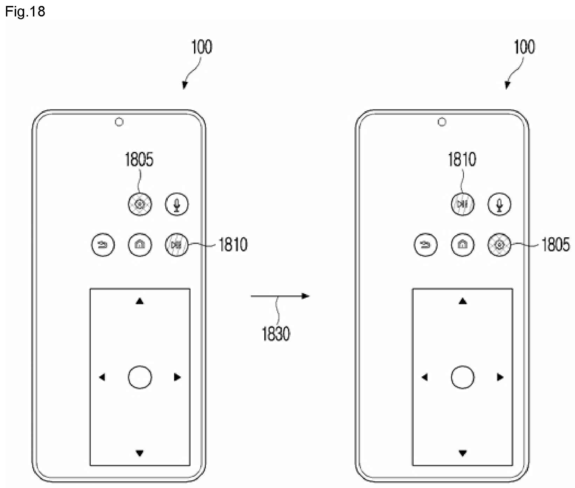

FIG. 18 is a diagram for showing the placement of the remote control UI based on the usage frequency, according to at least one embodiment of the present disclosure.

According to an embodiment of the present disclosure, the processor 120 may store the touch frequency for each of the plurality of menus in the memory 110. In addition, the processor 120 may control the display to readjust a display order of the plurality of menus based on the touch frequency.

Referring to FIG. 18, the remote control UI may have a first menu 1805 and a second menu 1810 displayed on the display 140. In an embodiment, the processor 120 may acquire the touch frequency for each of the first menu 1805 and the second menu 1810 and store the same in the memory.

In an embodiment, it is assumed that the touch frequency for the first menu 1805 is higher than the touch frequency for the second menu 1810. The processor 120 may change a position of the first menu 1805 to a position of the second menu 1810 and change the position of the second menu 1810 to the position of the first menu (operation 1830).

In an embodiment, the touch frequency may refer to the number of times the menu is touched per unit time or a total number of times the menu is touched.

According to an embodiment, the processor 120 may receive the trigger manipulation input from the user if the input for resetting a region reset input is received from the user.

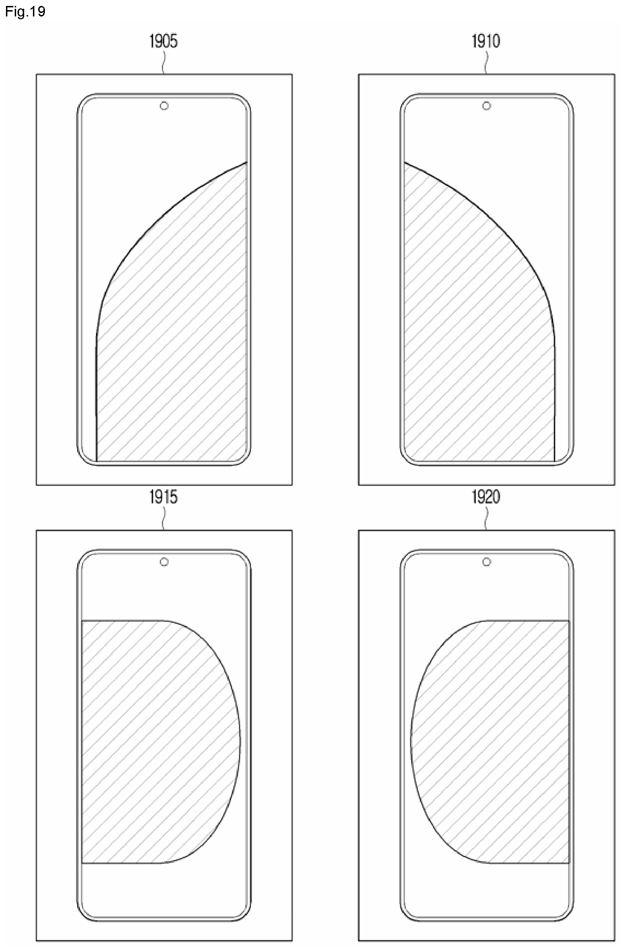

FIG. 19 is a diagram showing an example of the partial region, according to at least one embodiment of the present disclosure.

The partial region 300 may be acquired based on the user trigger manipulation. The partial region may be generated in various shapes and positions based on the user drawing trajectory, such as, but not limited to, a lower right 1905 of the display 140, as well as its lower left 1910, right 1920, and left 1915.

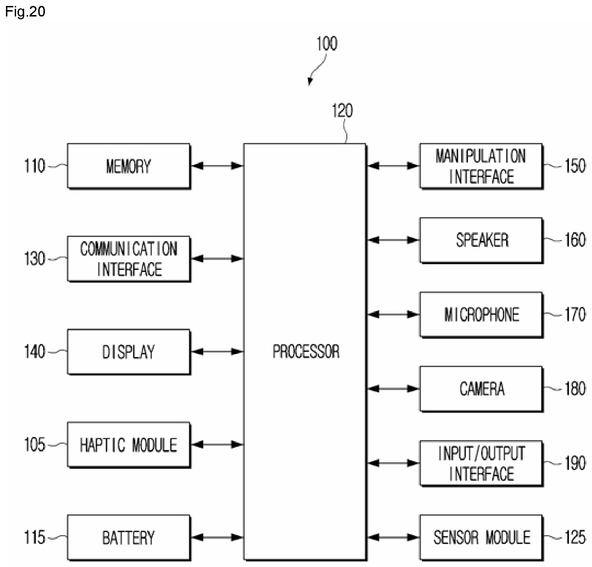

FIG. 20 is a block diagram for describing an example configuration of the electronic apparatus 100 shown in FIG. 2. The electronic apparatus 100 of FIG. 20 may include and/or may be similar in many respects to the electronic apparatus 100 described above with reference to FIGS. 1 to 19, and may include additional features not mentioned above. Consequently, repeated descriptions of the electronic apparatus 100 described above with reference to FIGS. 1 to 19 may be omitted for the sake of brevity.

Referring to FIG. 20, the electronic apparatus 100 may include at least one of the memory 110, a haptic module 105, a battery 115, at least one processor 120, a sensor module 125, the communication interface 130, the display 140, a manipulation interface 150, a speaker 160, a microphone 170, a camera 180, and an input/output interface 190.

The components, their relationships, and their functions shown in FIG. 20 are only examples, and may not limit the implementations described or claimed in this document. The electronic apparatus 100 may be referred to as a mobile device, a user device, a multi-function device, a portable device, or a server.

The manipulation interface 150 may be implemented as a device such as a button, a touch pad, a mouse or a keyboard, or may also be implemented as the touch screen which may also perform a manipulation input function in addition to the above-described display function. The button may be any of various types of buttons, such as a mechanical button, a touch pad, or a wheel, which is disposed in any region, such as the front surface portion, side surface portion, or rear surface portion of a body appearance of the electronic apparatus 100.

The input/output interface 190 may be any of a high definition multimedia interface (HDMI), a mobile high-definition link (MHL), a universal serial bus (USB), a display port (DP), Thunderbolt^{™}, a video graphics array (VGA) port, a red-green-blue (RGB) port, a D-subminiature (D-SUB), or a digital visual interface (DVI). The input/output interface 190 may input and/or output at least one of an audio signal or a video signal. In some embodiments, the input/output interface 190 may include a port for inputting and outputting only the audio signal and a port for inputting and outputting only the video signal as its separate ports, or may be implemented as a single port for inputting and outputting both the audio signal and the video signal. The electronic apparatus 100 may transmit at least one of the audio signal or the video signal to the external device (e.g., external display device or external speaker) through the input/output interface 190. The output port included in the input/output interface 190 may be connected to the external device, and the electronic apparatus 100 may transmit at least one of the audio signal or the video signal to the external device through the output port.

The input/output interface 190 may be connected with the communication interface. The input/output interface 190 may transmit information received from the external device to the communication interface, and/or transmit information received through the communication interface to the external device.

The speaker 160 may be a component for outputting not only various audio data but also various notification sounds, voice messages, or the like.

The microphone 170 may be a component for receiving a user voice or another sound and converting the same into audio data. The microphone 170 may receive the user voice while activated. For example, the microphone 170 may be integrated with the electronic apparatus 100 in its upper, front, or side direction. The microphone 170 may include various components such as, but not limited to, a microphone collecting the user voice in an analog form, an amplifier circuit amplifying the collected user voice, an analog to digital (A/D) conversion circuit sampling the amplified user voice and converting the same into the digital signal, a filter circuit removing a noise component from the converted digital signal, or the like.

The haptic module 105 may convert an electrical signal into a mechanical stimulus (e.g., vibration or movement) or an electrical stimulus capable of being received by the user through tactile or kinesthetic sensations. According to an embodiment, the haptic module 105 may include, for example, a motor, a piezoelectric element, or an electrical stimulation device.

The battery 115 may power at least one component of the electronic apparatus 100. According to an embodiment, the battery 115 may include, for example, a non-rechargeable primary battery, a rechargeable secondary battery, or a fuel cell.

The sensor module 125 may detect an operation state (e.g., power or temperature) of the electronic apparatus 100 or an external environmental state (e.g., user state) and generate the electric signal or a data value corresponding to the detected state. According to an embodiment, the sensor module 125 may include, for example, a gesture sensor, a gyro sensor, a pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The camera 180 may be a component for capturing a subject and generating a captured image, and the captured image may include both a moving image and a still image. The camera 180 may acquire an image of at least one external device, and may be implemented as a camera, a lens, an infrared sensor, or the like.

The camera 180 may include the lens and an image sensor. A type of lenses may include a general-purpose lens, a wide-angle lens, or a zoom lens, and may be determined based on the type, feature, usage environment, or the like of the electronic apparatus 100. The image sensor may use a complementary metal oxide semiconductor (CMOS), a charge coupled device (CCD), or the like.

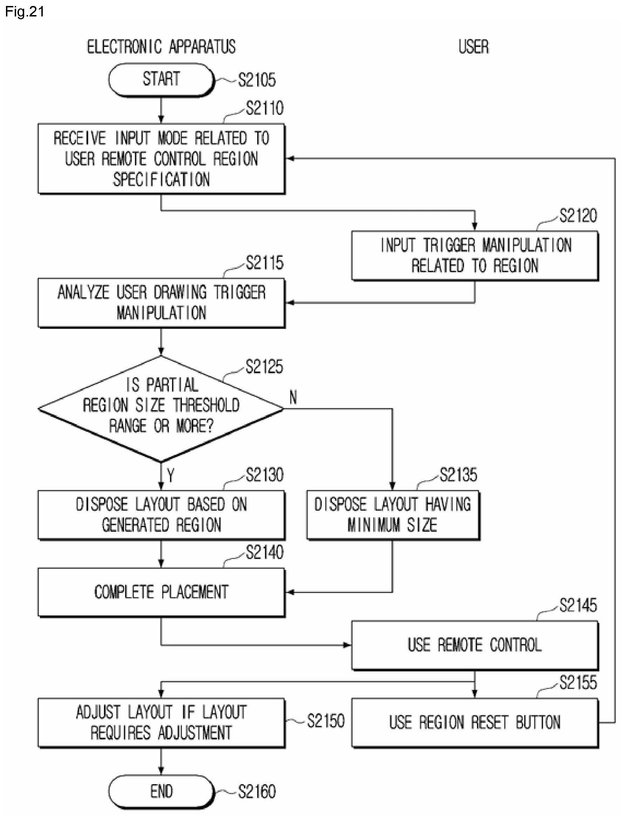

FIG. 21 is a flowchart for describing an operation of the electronic apparatus, according to at least one embodiment of the present disclosure.

Referring to FIG. 21, the electronic apparatus 100 may receive the trigger manipulation related to the user remote control region specification (S2110). The user may input the touch signal related to the region specification if the electronic apparatus 100 executes a trigger input mode (S2120). In an embodiment, the electronic apparatus 100 may analyze an image of the user trigger manipulation (S2115).

The image analysis of the trigger manipulation may include identifying the partial region based on the drawing trajectory of the trigger manipulation, the entire region size of the display, the initial touch point of the trigger manipulation, the final touch point of the trigger manipulation, the length of the drawing trajectory, the curvature of the drawing trajectory, the shape of the drawing trajectory, or the like.

In an embodiment, the electronic apparatus 100 may dispose the layout based on the generated region if the identified partial region size is the threshold range or more (operation S2130). In addition, the electronic apparatus 100 may dispose the layout having the minimum size if the generated partial region size is the threshold range (S2135).

If the electronic apparatus 100 disposes the remote control UI, the user may use the remote control UI (S2145), and re-input the touch signal related to the user remote control region specification by using the region reset button (S2155).

In addition, the electronic apparatus 100 may adjust the layout if the layout requires the adjustment(S2150).

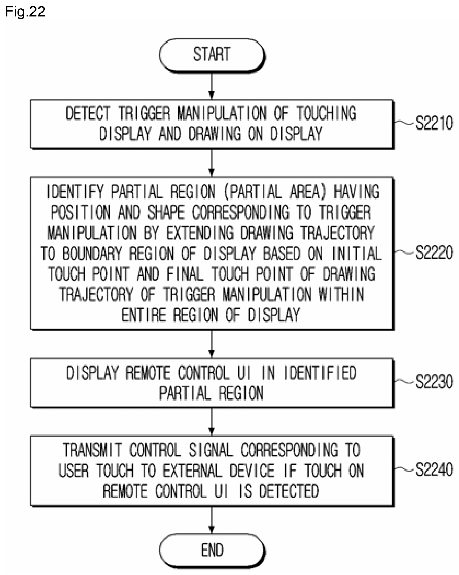

FIG. 22 is a flowchart for describing a controlling method of an electronic apparatus, according to at least one embodiment of the present disclosure.

Referring to FIG. 22, the control method of an electronic apparatus 100 may include identifying the partial region having the position and shape corresponding to the trigger manipulation by extending the drawing trajectory to the boundary region of the display based on the initial touch point and final touch point of the drawing trajectory of the trigger manipulation within the entire region of the display, based on the drawing trajectory of the trigger manipulation (S2220) if the trigger manipulation of touching the display and drawing on the same is detected (S2210); controlling the display to display the remote control UI for controlling the external device in the identified partial region (S2230); and transmitting the control signal corresponding to the user touch on the remote control UI to the external device (S2240).

The identifying of the partial region based on the drawing trajectory of the trigger manipulation and controlling the display to display the remote control UI in the identified partial region may be substantially similar and/or the same to operations described above with reference to FIG. 21, and may be omitted for the sake of brevity.

The identifying of the partial region may include identifying the partial region based on at least one of the entire region size of the display 140, the initial touch point of the trigger manipulation, the final touch point of the trigger manipulation, the length of the drawing trajectory, the curvature of the drawing trajectory, or the shape of the drawing trajectory.

The displaying of the remote control UI may include controlling the display to display the remote control UI in a size and shape corresponding to the identified partial region if the identified partial region size is the threshold range or more based on the drawing trajectory, and displaying the remote control UI on the display in the size and shape corresponding to the threshold range if the partial region size is the threshold range.

The displaying of the remote control UI may include determining at least one reference point within the partial region, and controlling the display to display the remote control UI including the plurality of menus within the identified partial region based on at least one reference point and layout data.

The electronic apparatus 100 may include estimating a point within the partial region as the user hold point, and increasing the size or touch recognition range of a menu among the plurality of menus that has the greater distance from the hold point relatively to the remaining menus.

The remote control UI may include the plurality of menus, and the control method may further include adjusting the display position or the touch recognition range based on the user touch detection position if the detection position on one of the plurality of menus deviates from the reference point of the menu by the predetermined distance or more.

The control method may further include adjusting the display position or touch recognition range of the entire plurality of menus if the user touch detection position on each of the plurality of menus is detected to deviate by the predetermined distance or more from the reference point of each menu the predetermined number of times.

The control method may include adjusting at least one of the size, position, shape, or touch recognition range of the menu based on the touch frequency for each of the plurality of menus.

The displaying of the remote control UI may include determining the size of one layout among the plurality of layouts based on the partial region size and controlling the display to display the remote control UI using the layout having the determined size.

The displaying of the remote control UI may include controlling the display to display the remote control UI based on the data on the partial region and the size and position of each of the plurality of menus included in the remote control UI that correspond to the shape of the partial region.

In an embodiment, the controlling method of an electronic apparatus described with reference to FIG. 22 may be performed by the electronic apparatus having the configuration shown in FIG. 2, is not necessarily limited thereto, and may be performed by the electronic apparatus having various other configurations.

According to at least one embodiment of the present disclosure, provided is an electronic apparatus including: a display; a communication interface configured to perform communication for controlling an external device; a memory storing data for a remote control user interface (UI) for controlling the external device; and a processor, wherein the at least one processor is configured to identify a partial region (partial area) having a position and shape corresponding to a trigger manipulation by extending a drawing trajectory to a boundary region of a display based on the initial touch point and final touch point of the drawing trajectory of the trigger manipulation within an entire region of the display if the trigger manipulation of touching the display and drawing on the display is detected, control the display to display the remote control UI in the identified partial region based on the data stored in the memory, and transmit a control signal corresponding to a user touch to the external device via the communication interface if the user touch on the remote control UI is detected.

The at least one processor may be configured to identify the partial region based on at least one of an entire region size of the display, the initial touch point of the trigger manipulation, the final touch point of the trigger manipulation, a length of the drawing trajectory, a curvature of the drawing trajectory, or a shape of the drawing trajectory.

The at least one processor may be configured to control the display to display the remote control UI having a size and shape corresponding to the identified partial region if the identified partial region size is a threshold range or more based on the drawing trajectory, and display the remote control UI having a size and shape corresponding to the threshold range on the display if the partial region size is the threshold range.

The memory stores data for a plurality of menus for the remote control of the external device and layout for arranging and displaying the plurality of menus within the remote control UI, and the at least one processor may be configured to determine at least one reference point within the partial region, and controlling the display to display the remote control UI including the plurality of menus within the identified partial region based on the at least one reference point and the layout data.

The at least one processor may be configured to estimate a point within the partial region as a user hold point, and increase the size or touch recognition range of a menu among the plurality of menus that has a greater distance from the hold point relatively to remaining menus.

The remote control UI includes a plurality of menus, and the at least one processor may be configured to adjust the display position or touch recognition range of the menu based on a user touch detection position if the detection position on one of the plurality of menus deviates from a reference point of the menu by a predetermined distance or more.

The at least one processor may be configured to adjust the display position or touch recognition range of an entire plurality of menus if a user touch detection position on each of the plurality of menus is detected to deviate by a predetermined distance or more from a reference point of each menu a predetermined number of times.

The remote control UI includes a plurality of menus, and the at least one processor may be configured to adjust at least one of the size, position, shape, or touch recognition range of the menu based on a touch frequency for each of the plurality of menus.

The memory includes data for a plurality of layouts for the remote control UI, and the at least one processor may be configured to determine a size of one layout among the plurality of layouts based on a partial region size, and control the display to display the remote control UI using the layout having the determined size.

The memory stores data on the size and position of each of a plurality of menus included in the remote control UI that corresponds to a shape of the partial region, and the at least one processor may be configured to control the display to display the remote control UI based on the partial region and the data stored in the memory.

According to at least one embodiment of the present disclosure, provided is a controlling method of an electronic apparatus, the method including: identifying a partial region (partial area) having a position and shape corresponding to a trigger manipulation by extending a drawing trajectory to a boundary region of a display based on the initial touch point and final touch point of the drawing trajectory of the trigger manipulation within an entire region of the display if the trigger manipulation of touching the display and drawing on the display is detected; displaying a remote control user interface (UI) in the identified partial region; and transmitting a control signal corresponding to a user touch to an external device if the user touch on the remote control UI is detected.

Although the various embodiments have been individually described hereinabove, each embodiment is not necessarily implemented individually, and may also be entirely or partially combined with at least one other embodiment and implemented together in one product.

The methods, according to the various embodiments of the present disclosure, described above may be implemented in the form of an application which may be installed on a conventional electronic apparatus.

The methods, according to the various embodiments of the present disclosure, described above may be implemented only by software upgrade or hardware upgrade of the conventional electronic apparatus.

The various embodiments of the present disclosure described above may be performed using an embedded server included in the electronic apparatus, or the external server of at least one of the electronic apparatus or the display device.

According to an embodiment of the present disclosure, the various embodiments described above may be implemented by software including an instruction stored on a machine-readable storage medium (e.g., a computer-readable storage medium). A machine may be a device that invokes the stored instruction from the storage medium, may be operated based on the invoked instruction, and may include the electronic apparatus in the disclosed embodiments. If the instruction is executed by the processor, the processor may directly perform a function corresponding to the instruction or another component may perform the function corresponding to the instruction under the control of the processor. The instruction may include the codes generated or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

According to various embodiments of the present disclosure, the methods described above may be provided by being included in a computer program product. The computer program product may be traded as a commodity between a seller and a purchaser. The computer program product may be distributed in a form of the machine-readable storage medium (e.g., a compact disc read only memory (CD-ROM)) or online through an application store. In case of the online distribution, at least portions of the computer program product may be at least temporarily stored on the storage medium such as the memory of a manufacturer server, an application store server or a relay server, or be temporarily generated.

Each of the components (for example, modules or programs) according to the various embodiments described above may include a single entity or a plurality of entities, and some of the corresponding sub-components described above may be omitted or other sub-components may be further included in the various embodiments. Alternatively or additionally, some of the components (e.g., modules or programs) may be integrated into the single entity, and may perform functions performed by the respective corresponding components before being integrated in the same or similar manner. Operations performed by the modules, the programs or other components according to the various embodiments may be executed in a sequential manner, a parallel manner, an iterative manner or a heuristic manner, at least some of the operations may be performed in a different order or be omitted, or other operations may be added.

Although the embodiments are shown and described in the present disclosure as above, the present disclosure is not limited to the above-described specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus, comprising:
a display;
a communication interface configured to communicate with an external device;
a memory storing first data for a remote control user interface (UI) and storing instructions; and
one or more processors comprising processing circuitry,
wherein the instructions, when executed by the one or more processors individually or collectively, cause the electronic apparatus to:
detect a trigger manipulation on the display comprising at least one of a touching of the display or a drawing on the display;
determine an initial touch point and a final touch point of a drawing trajectory of the trigger manipulation within the display;
identify a partial region having a position and a shape corresponding to the trigger manipulation by extending the drawing trajectory to a boundary region of the display based on the initial touch point and final touch point;
display, using the display, the remote control UI in the partial region by accessing the first data for the remote control UI stored in the memory; and
transmit, to the external device via the communication interface, a control signal corresponding to a user touch, based on the user touch being detected on the remote control UI.

2. The electronic apparatus of claim 1, wherein the instructions, when executed by the one or more processors individually or collectively, further cause the electronic apparatus to:
identify the partial region based on at least one of a size of the display, the initial touch point of the drawing trajectory, the final touch point of the drawing trajectory, a length of the drawing trajectory, a curvature of the drawing trajectory, or a shape of the drawing trajectory.

3. The electronic apparatus of claim 1, wherein the instructions, when executed by the one or more processors individually or collectively, further cause the electronic apparatus to:
display the remote control UI having a size and a shape corresponding to the partial region based on the size of the partial region being greater than or equal to a threshold range; and
display the remote control UI having a size and a shape corresponding to the threshold range based on the size of the partial region being less than the threshold range.

4. The electronic apparatus of claim 1, wherein the memory further stores second data for a plurality of menus of the remote control UI and layout data for arranging and displaying the plurality of menus within the remote control UI, and
wherein the instructions, when executed by the one or more processors individually or collectively, further cause the electronic apparatus to:
determine at least one reference point within the partial region; and
display the remote control UI comprising the plurality of menus within the partial region based on the at least one reference point and the layout data.

5. The electronic apparatus of claim 4, wherein the instructions, when executed by the one or more processors individually or collectively, further cause the electronic apparatus to:
estimate a point within the partial region as a user hold point; and
increase at least one of a size or a touch recognition range of a menu among the plurality of menus based on a comparison of distances between the user hold point and each menu of the plurality of menus.

6. The electronic apparatus of claim 1, wherein the remote control UI comprises a plurality of menus, and
wherein the instructions, when executed by the one or more processors individually or collectively, further cause the electronic apparatus to:
adjust at least one of a display position or a touch recognition range of a menu from among the plurality of menus based on a distance between a position of the user touch and a reference point of the menu being greater than or equal to a predetermined distance.

7. The electronic apparatus of claim 1, wherein the remote control UI comprises a plurality of menus, and
wherein the instructions, when executed by the one or more processors individually or collectively, further cause the electronic apparatus to:
adjust at least one of display positions or touch recognition ranges of the plurality of menus based on distances between user touch detection positions and reference points of each menu of the plurality of menus being greater than a predetermined distance at least a predetermined number of times.

8. The electronic apparatus of claim 1, wherein the remote control UI comprises a plurality of menus, and
wherein the instructions, when executed by the one or more processors individually or collectively, further cause the electronic apparatus to:
adjust at least one of a size, a position, a shape, or a touch recognition range of each menu of the plurality of menus based on a touch frequency.

9. The electronic apparatus of claim 1, wherein the memory further stores layout data for a plurality of layouts of the remote control UI, and
wherein the instructions, when executed by the one or more processors individually or collectively, further cause the electronic apparatus to:
determine a size of a selected layout from among the plurality of layouts based on a size of the partial region; and
display the remote control UI using the selected layout having the determined size.

10. The electronic apparatus of claim 1, wherein the memory further stores second data on a size and a position of each menu of a plurality of menus comprised in the remote control UI corresponding to a shape of the partial region, and
wherein the instructions, when executed by the one or more processors individually or collectively, further cause the electronic apparatus to:
display the remote control UI based on the partial region and the second data stored in the memory.

11. A controlling method of an electronic apparatus, the controlling method comprising:
detecting a trigger manipulation on the display comprising at least one of a touching of the display or a drawing on the display;
determining an initial touch point and a final touch point of a drawing trajectory of the trigger manipulation within the display;
identifying a partial region having a position and a shape corresponding to the trigger manipulation by extending the drawing trajectory to a boundary region of the display;
displaying a remote control user interface (UI) in the identified partial region; and
transmitting, to an external device, a control signal corresponding to a user touch based on the user touch being detected on the remote control UI.

12. The controlling method of claim 11, wherein the identifying of the partial region comprises:
identifying the partial region based on at least one of a size of the display, the initial touch point of the drawing trajectory, the final touch point of the drawing trajectory, a length of the drawing trajectory, a curvature of the drawing trajectory, or a shape of the drawing trajectory.

13. The controlling method of claim 11, wherein the displaying of the remote control UI comprises:
displaying the remote control UI having a size and a shape corresponding to the partial region based on the size of the partial region being greater than or equal to a threshold range; and
displaying the remote control UI having a size and a shape corresponding to the threshold range based on the size of the partial region being less than the threshold range.

14. The controlling method of claim 11, wherein the displaying of the remote control UI comprises:
determining at least one reference point within the partial region, and
displaying the remote control UI comprising a plurality of menus within the partial region based on the at least one reference point and layout data.

15. The controlling method of claim 14, further comprising:
estimating a point within the partial region as a user hold point; and
increasing at least one of a menu size or a touch recognition range of a menu from among the plurality of menus having a longest distance from the user hold point based on comparing distances between the user hold point and each menu of the plurality of menus.
